# EUROPEAN PATENT APPLICATION

(11) **EP 1 321 539 A2**
(43) Date of publication of application: **25.06.2003**
(21) Application number: 02380267.1
(22) Date of filing: 18.12.2002
(51) Int. Cl.: C23C 18/12

(54) **Process to deposit metal and metal oxide coatings**

(30) Priority: 18.12.2001 ES 200102825
(71) Applicant: CENTRO DE INVESTIGACIONES ENERGETICAS MEDIOAMBIENTALES Y TECNOLOGICAS (C.I.E.M.A.T.), E-28040 Madrid (ES)
(72) Inventor: Morales Sabio, Angel, 28040 Madrid (ES)
(74) Representative: Garcia-Cabrerizo y del Santo, Pedro Maria

(57) **Abstract**

The process permits producing metal and metal oxide coatings from precursor solutions, as occurs in the technique called sol-gel, but with the advantage that the precursor solutions do not include metal alkoxides to be hydrolyzed, for which reason the long term stability is excellent.

The precursor solutions of the coatings are prepared by dissolving a metal salt in ethanol with a complexing agent to favour its stability and/or an additive to provide the solution with the necessary properties to deposit it homogeneously on a substrate.

The precursor solutions are deposited by extracting the substrate at a constant rate, centrifuging or spraying, they are dried at temperatures between 50 and 150ºC and are densified by means of a thermal treatment at temperatures between 300 and 600ºC, for a time ranging from 10 to 60 minutes.

## Description

The invention discloses a process for the preparation of metal and metal oxide coatings on metal or dielectric substrates, from precursor solutions that do not include metal alkoxides in their composition, by means of the techniques of deposition, extraction at a constant rate, centrifuging or spraying.

### Background of the invention

There are different methods for the deposition of metal and metal oxide coatings from the solutions that contain the metal to be deposited, with which this patent has some analogies and multiple differences. The main ones are:
1.Sol-gel: Vitreous and crystalline metal and metal oxide coatings with very wide margins of composition and very good adherence, homogeneity and mechanical resistance can be prepared with the sol-gel technique. The patents ES-2,063,696 (De Sanctis O, 1995) and ES-2,148,589 (Durán A, 1998) disclose the preparation of protective coatings, deposited by means of the sol-gel technique, on various metal substrates, in which the precursor solution is prepared through the acid hydrolysis of different metal alkoxides in an alcoholic medium so that the polymerization of the alkoxide occurs, producing linear or three-dimensional chains of the metal oxide. The solutions used in these patents do not use any complexing or stabilizing agent of the metal to be deposited. This technique has the drawback that the precursor solutions prepared from the acid or basic hydrolysis of metal alkoxides in ethanol have problems of stability due to the fact that the hydrolysis reaction continues in the course of time, which implies that they can only be used during short periods of time in reproducible conditions. The patent EP 0887103A1 (Foot P., 1998) discloses a sol-gel solution in which, instead of using metal alkoxides with the formula Me(OR)₄, uses diacetones with the formula (MeCl₂(acac)₂. These compounds have hydrolysis and condensation reactions similar to those of the alkoxides and a polymeric solution is obtained.
   The main difference between the solutions disclosed in this patent and those of sol-gel are:
   - in this patent, as precursor compounds of the metals that are going to form the coating, metal alkoxides or other compounds which cause the formation of polymeric solutions are not used, but instead metal salts such as acetates, nitrates or chlorides. Therefore, problems with the stability of the solutions used do not arise as occurs with the solutions used in sol-gel, in which changes in the viscosity occur due to the fact that the polymerization continues in the course of time.
   - the precursor solutions of this patent permit depositing, not only metal oxide coatings as occurs with the sol-gel technique, but metal coatings in accordance with the composition of the solutions.

   The precursor solutions, as with the sol-gel technique, are deposited by extracting the substrate at a constant rate, centrifuging or spraying, they are dried at temperatures ranging from 50 to 150°C and are densified by means of thermal treatment at temperatures ranging from 300 to 600°C for 10 to 60 minutes.
2.Electroless. The technique called electroless consists of the deposition of metal films, without applying current, on substrates immersed in a solution comprised of a metal salt to be deposited, a complexing agent and a reducing agent. The patent US 3,830,650 (Henriksen G.L., 1973) discloses the formation of silver films on different substrates. The substrate to be coated is inserted in a mixture of two alcoholic solutions, one which contains a silver salt, sodium hydroxide and ammonium hydroxide or an amine and another solution that contains an aldehyde and which acts as a reducer. The reduction of the metal occurs while the substrate is immersed in the solution, due to the reduction of the silver by the aldehyde. Once the layer is deposited on one or several substrates, the solution cannot be reused. The patent ES-2,134,145 discloses a process similar to that of the previous patent to silver-plate pearls by immersion in a boiling solution, formed by silver nitrate, water and ethanol. The patent PCT/US00/15433 (Tepper F., 1999) discloses solutions to deposit metal films by immersion in a solution or by spraying a paste that contains an organic solvent, a metal salt to be deposited, a reducing agent and, in some cases, a gelling agent to achieve the consistency of paint. In all cases, the metal coating is produced by the reduction of the metal due to the action of the reducing agent used. The main differences between this patent and the disclosed electroless patents are:
   - it is not possible to deposit metal oxide layers by electroless.
   - the deposition of the metal film occurs when the substrate is immersed in the solution or comes into contact with the paste or paint, due to the action of the reducing agent on the metal ions, so that the metal is reduced on the substrate.
   - in the electroless technique, once the reducing agent is added to the solution or paint, the reduction of the metal occurs spontaneously, both on the substrate and in the solution or paint, for which reason it has a very limited duration. When electroless solutions are used, very little of the dissolved metal is used, as the majority of the metal is reduced in the solution and not on the substrate. In this patent, only the metal dissolved in a fine viscose layer deposited on the substrate is consumed, and the final coating is produced by a subsequent thermal treatment, in which the evaporation of the solvent, the combustion of the complexing additives and the thermal reduction of the metal occurs.
3. Aerosol pyrolysis. This technique consists of spraying an aqueous or alcohol solution which incorporates the metal, whose oxide is to be deposited, on a substrate that has been previously heated. The patents ES 2130977 (Polo J.L., 1999) and ES-2136027 (Polo J.L., 1999) disclose a process for the preparation of a stable solution, comprised of tin tetrachloride, a monohydroxylic alcohol, an inorganic acid and a hydrocarbon chloride. A deposition technique is spraying the solution on different substrates heated at a temperature between 150°C and 325°C to produce tin oxide as an anti-scratch coating. In this process, called aerosol pyrolysis, the solvent used evaporates in the path between the sprayer and the substrate, so that the little drops that reach the substrate decompose, producing a film of the metal oxide used. The main differences between the patent filed and those disclosed for pyrolysis are:
   - the solutions of the patents to produce tin oxide can only be used by means of spraying on a heated substrate, as homogeneous films do not form on a cold substrate. In this patent, the solutions can be deposited by extracting at a constant speed, centrifuging and spraying at room temperature.
   - Complexing or stabilizing agents of the solution are not used in aerosol pyrolysis to control the rheological properties.
   - The solutions of said aerosol pyrolysis patents only permit depositing metal oxides and not metal coatings.
   - The coatings obtained in this patent have excellent homogeneity and a high density, due to the fact that the heating of the fine layer of solution deposited on the substrate is carried out gradually, whilst the coatings made by spraying on a heated substrate have a structure formed by material particles from drops that reach the substrate. For which reason the final oxide layer has a certain porosity that lowers the density of the material and affects the optical and protective properties.

In consequence, the objectives of the process of the invention are:
1) To prepare coatings from different metals and metal oxides using a technique similar to that of sol-gel, but without using metal alkoxides or similar compounds that, after hydrolysis, form polymeric solutions. The precursor solution is deposited by means of the techniques of immersion and spraying on glass, metal substrates and ceramic materials.
2) To provide a process to produce metal and metal oxide coatings on different substrates, of variable compositions and which have excellent homogeneity, great adherence and good mechanical and thermal compatibility with the different substrates. It is a simple, economical process that is applicable to multiple substrate forms and sizes.

### Description of the invention

These objectives have been achieved by means of a process in which the precursor solutions are composed of a salt of the metal to be deposited, principally nitrates, acetates and chlorides, a complexing agent to stabilize the metal in the solution and a chemical compound so that the solutions have the suitable viscosity and surface tension properties so that they can be deposited homogeneously on different substrates by extracting at a constant speed, centrifuging or spraying. In the precursor solution, the metals are stabilized by means of the addition of complexing agents and do not produce any type of condensation or polymerization reaction of the complexing or stabilizing agents which alters the rheological properties of the solution in the course of time, for which reason the solutions can be used indefinitely.

A fine layer of the precursor solution is deposited in the substrate, at room temperature, by means of extraction at a constant rate, spraying or centrifuging and it undergoes a subsequent thermal treatment, in which the solvent evaporates, the combustion of the organic material is produced and a metal or metal oxide layer is formed in accordance with the thermal stability of the metal used.

### Brief description of the figures.

To complement the preceding description and for the object of helping towards a better understanding of the characteristics of the invention, a detailed description of a preferred embodiment will be made, based on a set of drawings which is attached to this descriptive report, and wherein the following is represented with a merely illustrative, non-limiting character:
Figure 1 shows the reflectance of an alumina layer (Al₂O₃) deposited on an aluminium substrate.
Figure 2 shows the reflectance of a layer of metal platinum deposited on an aluminium substrate with a protective silica layer deposited by sol-gel.

### Detailed description of a preferred embodiment

### a) Preparation of the solutions.

The solutions to prepare the different metal and metal oxide coatings are all prepared by dissolving, in ethanol, a salt which contributes the metal of the coating, a complexing agent of said salt to favour the stability of the metal in the solution without changes in the oxidation status being produced, and an additive so that the solution is deposited conveniently on the substrate. To prepare mixed metal coatings from several metals, the metals are inserted in the solution with the same or a different complexing agent and the homogenizing agent so that the solution is suitably deposited on the substrate.

For the solution to produce homogeneous films, it is necessary for it to have suitable viscosity and that during the deposition of the film and subsequent evaporation of the solvent, the precipitation of no substance occurs on the substrate. Said additives mean that the complex metal cation remains dissolved in the additive, forming a viscous, homogeneous film on the substrate, which, after the thermal sintering treatment, produces a homogeneous coating.

In accordance with the metal used, coatings will be obtained of the metal in its fundamental state or of the metal oxide which is most stable at the temperature of the sintering process. The Au, Pd, Pt and Rh solutions produce metal coatings in their fundamental state, the Cu, Ni and Ag solutions may produce coatings of the metal or oxide depending on the pH of the solution and the temperature of the thermal treatment and the Co, Cr, Sn, Pb, Zn, Cd, In, Ce and Al solutions always produce oxide coatings.

The salts which contribute the metal for the solution should be soluble in ethanol and acetates have been used for Cu, Ni, Co, Pb, Zn and Cd, chlorides for Au, Pt, Pd, Sn, In and Al and finally nitrates for Ce and Ag.

The complexing agents used with Au, Pt, Pd, Cu, Ni, Ag, Co, Pb and Zn have been different amines such as 2-(2-aminoetlylamine)-ethanol, 2-amino-2-methyl-1,3-propanediol, 2-(2-aminoethoxy)-ethanol, 3-amino-1-propanol and propanolamine in a molar ratio with regard to the metal ranging from 2 to 8. The amines stabilize the metal in the solution, and, at the same time act as additives to favour the deposition of the film. In the case of Cr, Sn, In, Ce, Rh and Al, no complexing agent has been used and 2-methyl-pentanediol in a molar ratio of between 1.5 and 8 has been used as homogenizing additive.

### b) Preparation of the substrates and film deposition.

The substrates used for the deposition of the different coatings have been glass, metals and ceramic materials. Any material that does not degrade after thermal treatment to densify the anti-reflective film can be used, and this usually ranges from 400 to 600°C.

The surface conditions of the materials that have to be coated are of major importance for the homogeneity and adherence of the coatings. The metal substrates' surface should be free from oxide and greasy substances. The glass substrates, ceramic materials and selective solar absorbers are washed with detergent in an ultrasound bath, rinsed with distilled water and kept in ethyl alcohol to be hydroxylated. The metal substrates are degreased and chemically attacked to eliminate the layer of oxide.

The film deposition can be carried out by immersion or spraying. The first method is more suitable for large, regular shaped pieces, the majority of which work in an air atmosphere. Spraying is more suitable when it is necessary to coat a great number of pieces, especially if they are small, given that it is performed by means of line processes.

In the immersion process, the pieces are immersed in the solution and are extracted at a constant rate. The thickness of the film deposited is in accordance with the extraction rate, the contact angle between the piece and the solution and the viscosity of the solution. The deposition process has a great influence on the quality of the coating: the extraction rates should not exceed 30 cm/min to avoid inhomogeneities and waves.

The process of deposition by spraying is controlled by several parameters of the equipment and by the conditions of the solution. Specifically, the spraying rate, particle size and distribution, the gas medium, nozzle type and size, and the viscosity, density and concentration of the solution.

After the deposition, a drying stage is carried out to eliminate the residual solvent that remains on the film. The treatment temperature ranges from room temperature to 150°C and the process duration ranges from 5 to 30 minutes.

The densification of the films is produced by thermal treatment, whose temperature, heating rate, time and atmosphere are determined by various factors: solution composition and concentration, thermal stability of the substrate and necessary degree of densification. The thermal treatment temperature ranges from 300 to 600°C, the heating rates from 5 to 100°C/min, and the treatment times from 10 to 60 minutes and the atmospheres used were air, nitrogen and argon.

The thickness of the coatings obtained varies in accordance with the solution composition and the deposition parameters. Homogeneous films ranging from 50 to 300 nm in thickness have been produced.

### c) Properties of the coated materials.

The optical properties of the coated substrates have been studied using reflectance and transmittance spectrophotometric measurements in the solar range (300 to 2500 nm) with a Perkin-Elmer, Lambda 9 model, spectrophotometer with a barium sulphate integrator sphere.

### EXAMPLES

Example 1) is a Pt coating on an glass borosilicate substrate, example 2) is an Ag coating on a commercial electropolished aluminium substrate protected with a layer of silica, example 3) is a SnO₂ coating on a glass borosilicate substrate, example 4) is a 95% In₂O₃-5% SnO₂ coating on glass borosilicate, example 5) is an Al₂O₃ coating on an electropolished aluminium substrate, example 6) a ZnO coating on a polished monocrystalline silicon chip and example 7) is a metal Pt coating on an electropolished aluminium substrate protected with a layer of silica.

### Example 1) Pt coating on a glass borosilicate substrate.

The glass was washed with detergent in an ultrasound bath, rinsed with distilled water and kept in ethyl alcohol to be hydroxylated.

The precursor solution is prepared by adding 4 ml of a 428 g/l commercial chloroplatinic acid solution in 10 ml of absolute ethanol. 4 ml of 2-(2-aminoethylamine)-ethanol were then added with strong agitation until the precipitation initially formed has completely dissolved. Finally, the precursor solution was diluted with another 30 ml of absolute ethanol to achieve the desired viscosity.

The film underwent thermal treatment at 500ºC for 10 minutes, obtaining a semi-transparent metal platinum film with strong reflective power and good homogeneity.

### Example 2) Ag coating on a commercial electropolished substrate protected with a layer of silica.

The commercial electropolished aluminium substrates are cleaned, for between 4 and 10 seconds, in a solution of 2.5% in weight of hydrofluoric acid, rinsed with distilled water and air-dried. The silica layer with approximately 150 nm thickness is deposited by means of the sol-gel technique.

The precursor solution was prepared by dissolving 3 ml of propanolamine in 20 ml of ethanol. 1g of silver nitrate was added, with strong agitation until it was completely dissolved and was diluted with 30 ml of absolute ethanol.

The films were deposited by immersion, with extraction rates of between 8 and 20 cm/min, they were dried at room temperature for 15 minutes and sintered in the oven for 15 minutes at 300ºC.

### Example 3) Pt metal coating on a carbon steel substrate with an electrolytic coating of nickel and gold and a layer of SiO₂ deposited by sol-gel.

The carbon steel substrate was mechanically polished until a mirror finish was obtained and it was coated by electrolysis, first with a 10 micron nickel layer and, subsequently, with a 1 micron gold layer.

The silica precursor solution was prepared in a single stage starting from TEOS, hydrolyzed in acid medium with HCl with a molar ratio TEOS/Ethanol/HCl/H₂O = 1/15/0.1/4. The silica film was deposited by immersion with extraction rates of between 4 and 25 cm/min and they were thermally treated at 500ºC for 1 hour.

The platinum layer was deposited by a process similar to that disclosed in example 1).

The coatings obtained were homogenous and they did not have cracks or defects.

### Example 4) 95% In₂O₃-5% SnO₂ coatings on glass borosilicate.

The glass was washed with detergent in an ultrasound bath, rinsed with distilled water and kept in ethyl alcohol to be hydroxylated.

The precursor solution of the 95%In₂O₃-5%SnO₂ mixture was prepared by dissolving 2 g of In₂Cl₃ and 0.175 g of SnCl₄-5H₂O in 30 ml of ethanol and then 4 ml of 2-methyl-pentanediol were added.

The film was deposited by immersion with extraction rates of between 4 and 25 cm/min and they were thermally treated at 500°C for 1 hour.

The coatings obtained were homogenous and they did not have cracks or defects.

### Example 5) Al₂O₃ coating on an electropolished aluminium substrate.

The precursor solution was prepared by dissolving 2 g of Al(NO₃)₃-9H₂O in a solution composed of 30 ml absolute ethanol, 3 ml of 2-(2-aminoethoxy)-ethanol and 2 ml of acetic acid.

The coatings made at rates of between 4 and 20 cm/min were dried and thermally treated at 500°C. The resulting layers were transparent and homogeneous in all cases.

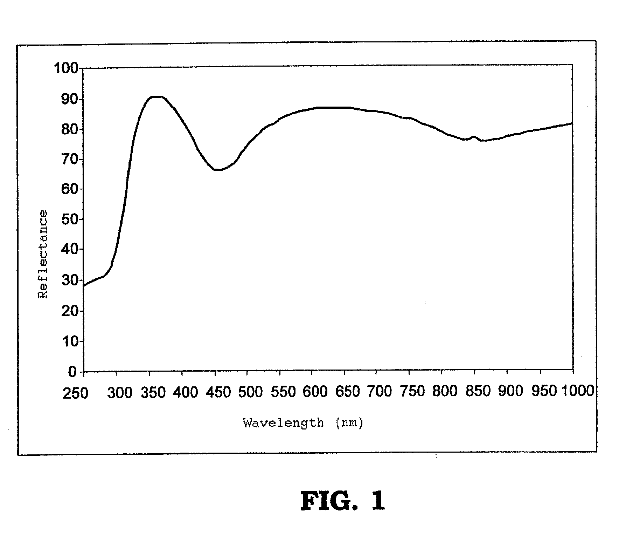

The hemispheric reflectivity of the electropolished aluminium substrate with the Al₂O₃ layer is shown in figure 1.

### Example 6) ZnO coating on a polished monocrystalline silicon chip.

The monocrystalline silicon chips are cleaned for 1 minute in a 1% hydrofluoric acid solution at 20°C, rinsed with distilled water and air-dried.

The precursor solution is prepared by dissolving 2 g of (CH₃-COO)₃Zn in 40 ml of absolute ethanol and subsequently 2 ml of 3-amino-1-propanol were added.

The substrates were extracted at rates of between 6 and 16 cm/min and were sintered at temperatures between 350 and 500°C.

The coatings prepared have excellent homogeneity and a considerable anti-reflective effect on polished monocrystalline silicon substrates.

### Example 7) Metal Pt coating on a polished aluminium substrate protected by a layer of silica.

The platinum precursor solution was prepared similarly to that in example 1) and the protective layer of silica on the aluminium substrate was prepared according to example 3).

The extraction rates ranged from 4 to 20 cm/min and the coatings obtained were, in all cases, homogeneous and adherent. Depending on the thickness of the platinum layer, the samples showed strong absorption of visible light for fine layers or strong metal shine for thick layers.

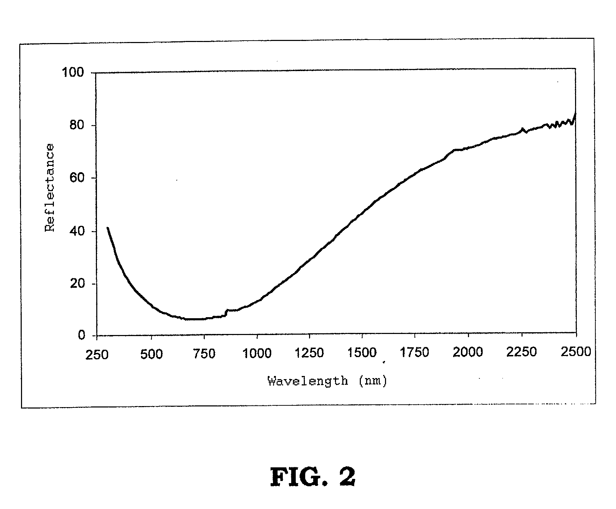

The hemispheric reflectivity is shown in figure 2.

**Table 2:**

| **Summary of the main metal and metal oxide coatings produced, as well as the complexing agent and homogenizing additive.** | | | |
|---|---|---|---|
| Metal | Complexing agent | Homogenizer | Final Coating |
| Au | Amine | amine | Au |
| Pt | Amine | amine | Pt |
| Pd | Amine | amine | Pd |
| Rh | | 2-methyl-pentanediol | Rh |
| Ag | amine | amina | Ag/Ag₂O |
| Cu | amine | amine | Cu₂O |
| Ni | amine | amine | NiO |
| Co | amine | amine | CoO/Co₂O₃ |
| Cr | | 2-methyl-pentanediol | Cr₂O₃ |
| Sn | | 2-methyl-pentanediol | SnO₂ |
| Pb | amine | amine | PbO |
| Zn | amine | amine | ZnO |
| Cd | amine | amine | CdO |
| Al | | amine | Al₂O₃ |
| In | | 2-methyl-pentanediol | In₂O₃ |
| Ce | | 2-methyl-pentanediol | CeO₂ |

## Claims

1. Process to deposit metal and metal oxide coatings on different substrates, **characterized in that** it comprises the following stages:
Preparation of the precursor solution by means of dissolving, in ethanol, a metal salt, a complexing agent to increase the stability of the metal in the solution and/or a homogenizing agent to permit the film to be deposited homogeneously on the substrate.
Deposition of a fine layer of the precursor solution on the substrate at room temperature by means of extraction at a constant rate, spraying or centrifuging, dried at temperatures ranging from 50 and 150ºC.
Subsequent thermal treatment, in which the solvent is evaporated, the combustion of the organic matter is produced and a metal or metal oxide layer is formed in accordance with the thermal stability of the metal used.

2. Process according to claim 1, **characterized in that** the salts that contribute the metal for the solution are acetates for Cu, Ni, Co, Pb, Zn and Cd.

3. Process according to claim 1, **characterized in that** the salts that contribute the metal for the solution are chlorides for Au, Pt, Pd, Sn and Al.

4. Process according to claim 1, **characterized in that** the salts that contribute the metal for the solution are nitrates for Ce and Ag.

5. Process according to claim 1, **characterized in that** the complexing agents are amines for the coatings that include Au, Pt, Pd, Cu, Ni, Ag, Co, Pb, Al and Zn.

6. Process in accordance with claim 5, **characterized in that** the amines are 2-(2-aminoethylamine)-ethanol, 2-amino-2-methyl-1,3-propanediol, 2-(2-aminoethoxy)-ethanol, 3-amino-1-propanol and propanolamine in an amine/metal molar ratio of 2 to 8; so that they stabilize the metal in the solution and, at the same time, act as additives to favour the film deposition.

7. Process in accordance with claim 1, **characterized in that** no complexing agent is used for the metals Cr, Sn, In and Rh and 2-methyl-pentanediol in an additive/metal molar ratio of 1.5 to 8 is used for the additive.

8. Process in accordance with claim 1, **characterized in that** the thermal treatment is performed at between 300ºC and 600ºC with a time ranging from 10 to 60 minutes, and in air, N₂ o Ar atmospheres.
